# EUROPÄISCHE PATENTSCHRIFT

(11) **EP 1 366 956 B1**
(45) Veröffentlichungstag und Bekanntmachung des Hinweises auf die Patenterteilung: **18.06.2008**
(21) Anmeldenummer: 03090147.4
(22) Anmeldetag: 16.05.2003
(51) Int. Cl.: B60Q 5/00, F16B 35/04, F16B 41/00

(54) **Anordnung zur Verbindung einer Kontaktbrücke eines Lenkrads mit einem im Abstand zu diesem angeordneten Kontaktblech**
Structure for connecting a contact bridge of a steering wheel to a contact plate arranged at a distance from said bridge
Structure pour joindre un pont de contact d'un volant à une plaque de contact distante de ce dernier

(30) Priorität: 21.05.2002 DE 10223114
(43) Veröffentlichungstag der Anmeldung: 03.12.2003
(73) Patentinhaber: Takata-Petri AG, 63743 Aschaffenburg (DE)
(72) Erfinder: Becker, Richard, 63762 Grossostheim (DE)
(74) Vertreter: Baumgärtel, Gunnar

(56) Entgegenhaltungen:
- EP-A- 0 618 385
- EP-A- 0 744 329
- EP-A- 0 892 183
- DE-A- 4 111 374
- US-A- 4 114 509

## Beschreibung

Die Erfindung betrifft eine Anordnung zur Verbindung einer Kontaktbrücke eines Lenkrades mit einem im Abstand zu diesem angeordneten Kontaktblech.

Im Maschinen- und Fahrzeugbau aber auch auf anderen technischen Gebieten ist es wünschenswert, Baugruppen vorzumontieren und diese zu einem Fertigprodukt zusammenzusetzen. So ist es üblich, Bauteile in der Vormontage bereits mit Befestigungselementen wie Schrauben oder Bolzen zu versehen, mit denen die Bauteile bei der Komplettmontage an anderen Baugruppen befestigt werden. Die Befestigungselemente müssen an den Bauteilen in der für die spätere Endmontage erforderlichen Position angebracht und so gesichert werden, dass sie diese Position auch bei einem Transport nicht verändern.

So ist es aus der Praxis im Fahrzeugbau bekannt, Kontaktbrücken für Lenkräder vorzumontieren. Kontaktbrücken werden für die Betätigung der Hupe benötigt. Die komplette Kontaktbrücke besteht aus einem Kontaktblech und einem im Abstand zu diesem angeordneten weiteren Blechteil, das als Kontaktbrücke bezeichnet wird. Beide Teile sind an mindestens einer Stelle mit Kontakten versehen. Zwischen beiden Teilen sind Druckfedern angeordnet, die deren Mindestabstand gewährleisten, so dass sich gegenüberliegende Kontakte nicht berühren. Die Kontakte werden durch Niederdrücken der Kontaktbrücke in Richtung des Kontaktblechs geschlossen.

Die Kontaktbrücke und das Kontaktblech sind über Schrauben miteinander verbunden. Die Schrauben werden durch entsprechende Durchbrüche von der Oberseite der Kontaktbrücke eingeführt und unter Zwischenlage der Druckfedern durch das Kontaktblech gesteckt, so dass das Schraubengewinde frei liegt. Die Befestigung erfolgt mittels je einer Zahnscheibe. Mittels eines Werkzeugs wird die Zahnscheibe in einen Einstich der Schraube gedrückt. Damit ist eine Verbindung zwischen der Schraube und dem Kontaktblech hergestellt und der Abstand zwischen diesem und der Kontaktbrücke gesichert. Damit liegt eine Komplettbaugruppe vor. Die Schrauben für die Befestigung der Komplettbaugruppe am Lenkrad sind einerseits sicher befestigt, andererseits sind sie in den Buchsen drehbar geführt.

Der Nachteil dieser Anordnung besteht darin, dass für die Befestigung der Schraube am Kontaktblech die Zahnscheibe als zusätzliches Bauteil erforderlich ist und dass die Durchbrüche für die Schrauben in einem separaten Kunststoffspritzwerkzeug mit Kunststoff umspritzt werden müssen, so dass eine Kunststoffbuchse für die Führung der Schrauben entsteht.

Aus EP-A-0 744 329 ist ein weiteres Anordnung zur Verbindung einer kompletten Kontaktbrücke mit einem Lenkrad bekannt.

Weiterhin sind aus dem DE-GM 1 847 635 und der DE 41 11 374 A1 Befestigungselemente bekannt, die Spreizhülsen für die Aufnahme von Befestigungselementen aufweisen. Die Spreizhülsen rasten in der Endstellung der zu verbindenden Teile an diesen und an den Befestigungselementen, z. B. Zapfen, ein. Eine Befestigung dieser Baugruppe an einer weiteren Baugruppe ist mittels dieser Befestigungselemente nicht möglich.

Der Erfindung liegt die Aufgabe zugrunde, die Verbindung einer Kontaktbrücke mit einem Kontaktblech und die weitere Verbindung dieser komplexen Baugruppe mit dem Lenkrad zu vereinfachen.

Erfindungsgemäß wird das gemäß den Merkmalen des Anspruchs 1 erreicht.

Erfindungsgemäß ist eine Anordnung zur Verbindung einer Kontaktbrücke eines Lenkrades mit einem im Abstand zu dieser angeordneten Kontaktblech mittels einer Rastverbindung mit mindestens einer Schraube sowohl für die Verbindung der Kontaktbrücke mit dem Kontaktblech als auch als Befestigungselement für die Verbindung dieser kompletten Kontaktbrücke mit dem Lenkrad vorgesehen, wobei in einem Durchbruch des Kontaktblechs für die Schraube eine elastisch verformbare Buchse vorgesehen ist, die einen Rastabschnitt aufweist, dem ein Rastabschnitt in der Schraube zugeordnet ist.

Für eine Rastverbindung ist es nicht erforderlich, die Durchbrüche für die Schrauben mit Kunststoff zu umspritzen. Eine zusätzliche Zahnscheibe entfällt ebenfalls.

Es ist zweckmäßig, dass die elastisch verformbare Buchse von der Seite des Kontaktbleches in dieses einschiebbar ist, die der Kontaktbrücke abgewandt ist, und dass die Buchse an dieser Seite einen Flansch aufweist.

In einer weiteren Ausgestaltung ist vorgesehen, dass die Buchse aus dem Kontaktblech in Richtung der Kontaktbrücke herausragt und dass der herausragende Abschnitt von einer zwischen dem Kontaktblech und der Kontaktbrücke angeordneten Druckfeder umgeben ist.

Die Schraube ist im Kontaktblech drehbar befestigt.

In einer ersten Ausführungsform weist die Buchse im Rastabschnitt eine Rastnase auf, der in der Schraube eine Rille zugeordnet ist.

Die Rille ist in einem gewindefreien Abschnitt der Schraube vorgesehen.

In einer zweiten Ausführungsform weist die Schraube eine Rastnase auf, der in der Buchse eine Rille zugeordnet ist. Die Rastnase ist in einem gewindefreien Abschnitt der Schraube vorgesehen.

Vorzugsweise sind bei beiden Ausführungsformen eine umlaufende Rille und eine umlaufende Rastnase vorgesehen.

Die Erfindung soll anhand von Zeichnungen näher erläutert werden. Es zeigen:
- Fig. 1: eine Kontaktbrücke in der Draufsicht;
- Fig. 2: einen Schnitt A-A durch eine komplette Kontaktbrükke in der bisherigen Ausführung;
- Fig. 3: die Einzelheit Z der Fig. 2;
- Fig. 4: einen Schnitt A-A durch eine komplette Kontaktbrücke gemäß der Erfindung;
- Fig. 5: die Einzelheit Z der Fig. 4
- Fig. 6: eine erfindungsgemäße Buchse
- Fig. 7: eine erfindungsgemäße Schraube

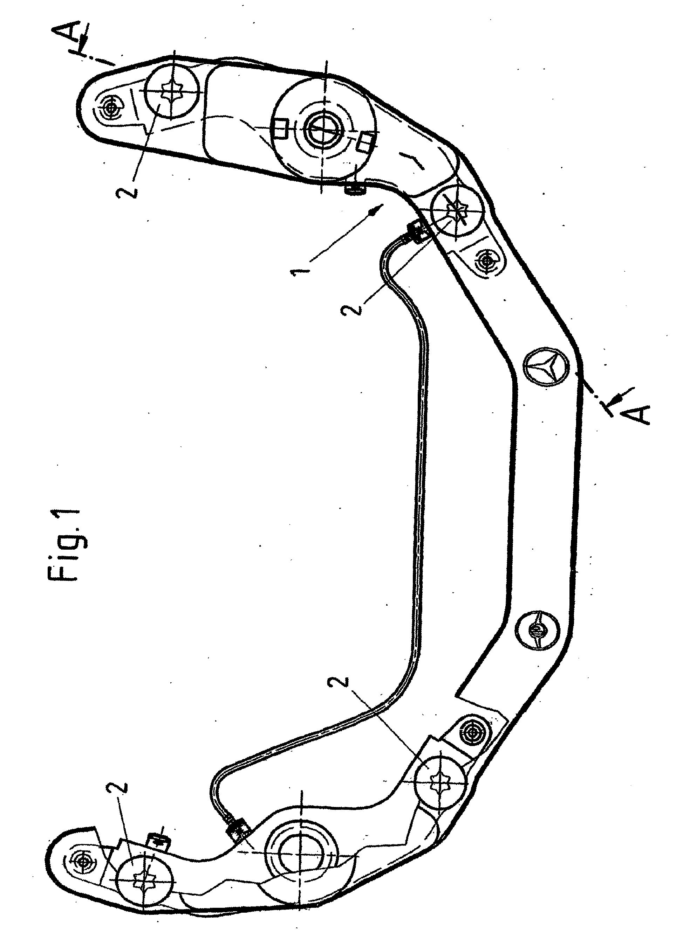

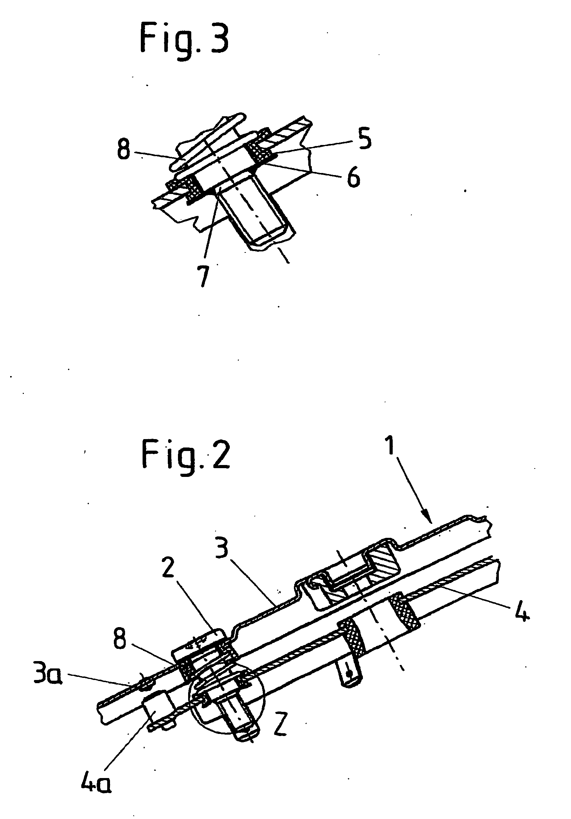

In der Fig. 1 ist eine komplette Kontaktbrücke 1 dargestellt, deren Teile durch Schrauben 2 verbunden sind. Aus der Fig. 2 ist ersichtlich, daß die komplette Kontaktbrücke 1 im wesentlichen eine Kontaktbrücke 3 aufweist der ein Kontaktblech 4 im Abstand gegenüberliegt. Die Kontaktbrücke 3 weist mindestens einen Kontakt 3a auf, dem am Kontaktblech 4 ein Gegenkontakt 4a zugeordnet ist. Jede Schraube 2 liegt mit ihrem Kopf an der Kontaktbrücke 3 an und ist im Kontaktblech 4 in einer Buchse 5 drehbar geführt. Diese ist mit einer Zahnscheibe 6 verbunden. Jede Schraube 2 weist einen Einstich 7 auf, in den die Zahnscheibe 6 eingreifen kann.

Nachdem die Schrauben 2 zusammen mit jeweils einer Druckfeder 8 in die Kontaktbrücke 3 und in das Kontaktblech 4 eingeführt worden sind, wird die Zahnscheibe 6 mittels eines Werkzeugs in den Einstisch 7 gedrückt, wie es in der Fig. 3 dargestellt ist, so daß sie fest mit dem Kontaktblech 4 verbunden ist. Nachdem alle Schrauben 2 in der beschriebenen Weise befestigt worden sind, liegt die komplette Kontaktbrücke 1 als Vormontagebaugruppe für den Einbau in ein Lenkrad vor.

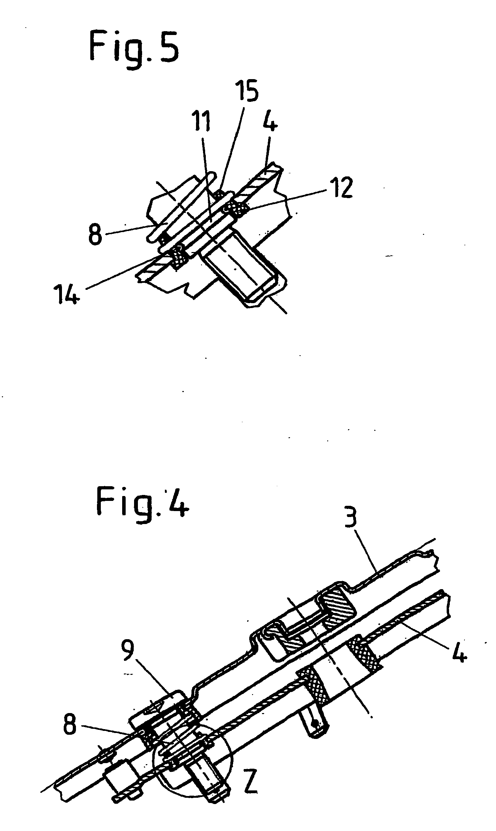

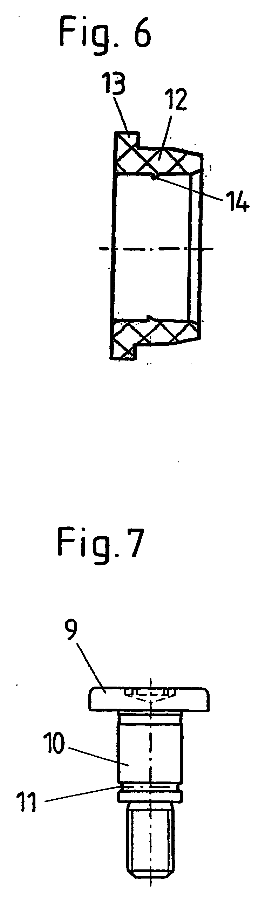

In den Figuren 4 bis 7 ist eine Ausführung der erfindungsgemäßen Anordnung dargestellt. Für die Verbindung der Kontaktbrücke 3 mit dem Kontaktblech 4 sind Schrauben 9 vorgesehen, die in einem gewindefreien Abschnitt 10 des Schaftes eine Rille 11 aufweisen, die ringförmig verläuft. Diesem Schraubenabschnitt ist eine Buchse 12 im Kontaktblech 4 zugeordnet, die einen Flansch 13 und eine Rastnase 14 aufweist, die ebenfalls ringförmig verläuft. Sowohl die Rille als auch die Rastnase müssen aber nicht ringförmig ausgebildet sein, sondern können auch als Segmente vorgesehen sein.

Bei der Montage werden die Schrauben 9 in die Kontaktbrücke 3 eingeführt und unter Zwischenlage der Druckfedern 8 wird das Kontaktblech 4 mit den Buchsen 12 in Richtung der Kontaktbrücke 3 gedrückt, bis die Rastnasen 14 der Buchsen 12 in die Rillen 11 der Schrauben 9 eingerastet sind, wie es in den Figuren 4 und 5 dargestellt ist. In dieser eingerasteten Stellung ragt die Buchse 12 über das Kontaktblech 4 in Richtung der Kontaktbrücke 3. Die Druckfeder 8 umgreift den herausragenden Abschnitt 15 der Buchse 12.

Für diese erfindungsgemäße Verbindung ist keine Zahnscheibe erforderlich, d.h. es entfällt ein zusätzliches Bauteil. Weiterhin ist kein separates Kunststoffspritzwerkzeug erforderlich.

Nach dem Einrasten der Buchsen 12 in die Schrauben 9 liegt die komplette Kontaktbrücke 1 als Vormontagebaugruppe vor, die nun mittels der Schrauben 9 am Lenkrad befestigt werden kann.

Neben dieser Ausführungsform ist auch eine Ausführungsform möglich, bei der die Schrauben eine Rastnase und die Buchsen eine zugeordnete Rille aufweisen. Diese Ausführungsform wurde nicht gesondert dargestellt.

## Patentansprüche

1. Anordnung zur Verbindung einer Kontaktbrücke (3) eines Lenkrades mit einem im Abstand zu dieser angeordneten Kontaktblech (4) mittels einer Rastverbindung (11,14) mit mindestens einer Schraube (9) sowohl für die Verbindung der Kontaktbrücke (3) mit dem Kontaktblech (4) als auch als Befestigungselement für die Verbindung der aus der Kontaktbrücke (3) und dem Kontaktblech (4) bestehenden, kompletten Kontaktbrücke (1) mit dem Lenkrad, wobei in einem Durchbruch des Kontaktblechs (4) für die Schraube (9) eine elastisch verformbare Buchse (12) vorgesehen ist, die einen Rastabschnitt (14) aufweist, dem ein Rastabschnitt (11) in der Schraube (9) zugeordnet ist.

2. Anordnung nach Anspruch 1, **dadurch gekennzeichnet, daß** die elastisch verformabare Buchse (12) von der Seite des Kontaktbleches (4) in dieses einschiebbar ist, die der Kontaktbrücke abgewandt ist, und daß die Buchse (12) an dieser Seite einen Flansch (13) aufweist.

3. Anordnung nach Anspruch 1 oder 2, **dadurch gekennzeichnet, daß** die Buchse (12) aus dem Kontaktblech (4) in Richtung der Kontaktbrücke (3) herausragt und daß der herausragende Abschnitt (15) von einer zwischen dem Kontaktblech (4) und der Kontaktbrücke (3) angeordneten Druckfeder (8) umgeben ist.

4. Anordnung nach mindestens einem der vorhergehenden Ansprüche, **dadurch gekennzeichnet, daß** die Schraube (9) im Kontaktblech (4) drehbar befestigt ist.

5. Anordnung nach mindestens einem der vorhergehenden Ansprüche, **dadurch gekennzeichnet, daß** die Buchse (12) im Rastabschnitt eine Rastnase (14) aufweist, der in der Schraube (9) eine Rille (11) zugeordnet ist.

6. Anordnung nach Anspruch 5, **dadurch gekennzeichnet, daß** die Rille (11) in einem gewindefreien Abschnitt (10) der Schraube vorgesehen ist.

7. Anordnung nach mindestens einem der Ansprüche 1 bis 4, **dadurch gekennzeichnet, daß** die Schraube eine Rastnase aufweist, der in der Buchse eine Rille zugeordnet ist.

8. Anordnung nach Anspruch 7, **dadurch gekennzeichnet, daß** die Rastnase in einem gewindefreien Abschnitt der Schraube vorgesehen ist.

9. Anordnung nach mindestens einem der Ansprüche 5 bis 8, **dadurch gekennzeichnet, daß** eine umlaufende Rille (11) vorgesehen ist.

10. Anordnung nach mindestens einem der Ansprüche 5 bis 9, **dadurch gekennzeichnet, daß** eine umlaufende Rastnase (14) vorgesehen ist.

## Claims

1. Arrangement for the connection of a contact bridge (3) of a steering wheel to a contact plate (4) arranged at a distance from said bridge by means of a latching connection (11, 14) having at least one screw (9) both for the connection of the contact bridge (3) to the contact plate (4) and as a fastening element for the connection of the entire contact bridge (1), consisting of the contact bridge (3) and the contact plate (4), to the steering wheel, wherein an elastically deformable bushing (12) for the screw (9) is provided in an aperture of the contact plate (4) which bushing has a latching section (14) which is assigned a latching section (11) in the screw (9).

2. Arrangement according to Claim 1, **characterized in that** the elastically deformable bushing (12) can be pushed into the contact plate (4) from that side of it which faces away from the contact bridge, and **in that** the bushing (12) has a flange (13) on this side.

3. Arrangement according to Claim 1 or 2,
**characterized in that** the bushing (12) protrudes out of the contact plate (4) in the direction of the contact bridge (3), and **in that** the protruding section (15) is surrounded by a compression spring (8) arranged between the contact plate (4) and the contact bridge (3).

4. Arrangement according to at least one of the preceding claims, **characterized in that** the screw (9) is fastened rotatably in the contact plate (4).

5. Arrangement according to at least one of the preceding claims, **characterized in that** the bushing (12) has, in the latching section, a latching lug (14) which is assigned a groove (11) in the screw (9).

6. Arrangement according to Claim 5, **characterized in that** the groove (11) is provided in a thread-free section (10) of the screw.

7. Arrangement according to at least one of Claims 1 to 4, **characterized in that** the screw has a latching lug which is assigned a groove in the bushing.

8. Arrangement according to Claim 7, **characterized in that** the latching lug is provided in a thread-free section of the screw.

9. Arrangement according to at least one of Claims 5 to 8, **characterized in that** an encircling groove (11) is provided.

10. Arrangement according to at least one of Claims 5 to 9, **characterized in that** an encircling latching lug (14) is provided.

## Revendications

1. Arrangement pour joindre un pont de contact (3) d'un volant avec une tôle de contact (4) disposée à une certaine distance de celui-ci, au moyen d'une liaison à enclenchement (11, 14) avec au moins une vis (9) aussi bien pour la liaison du pont de contact (3) avec la tôle de contact (4) qu'en tant qu'élément de fixation pour la liaison du pont de contact (1) complet -constitué du pont de contact (3) et de la tôle de contact (4)- avec le volant, moyennant quoi, dans un passage de la tôle de contact (4) pour la vis (9), il est prévu une douille (12) élastiquement déformable qui présente une section d'enclenchement (14) à laquelle est affectée une section d'enclenchement (11) dans la vis (2).

2. Arrangement selon la revendication 1, **caractérisé en ce que** la douille élastiquement déformable (12) peut être introduite dans la tôle de contact (4) par le côté de celle-ci qui est détourné du pont de contact, et **en ce que** la douille (12) présente une bride (13) sur ce côté.

3. Arrangement selon la revendication 1 ou 2, **caractérisé en ce que** la douille (12) fait saillie à partir de la tôle de contact (4) en direction du pont de contact (3), et **en ce que** la section faisant saillie (15) est entourée d'un ressort à pression (8) disposé entre la tôle de contact (4) et le pont de contact (3).

4. Arrangement selon au moins l'une des revendications précédentes, **caractérisé en ce que** la vis (9) est fixée de façon rotative dans la tôle de contact (4).

5. Arrangement selon au moins l'une des revendications précédentes, **caractérisé en ce que** la douille (12) présente un bec d'enclenchement (14) dans la section d'enclenchement auquel est affectée une rainure (11) dans la vis (9).

6. Arrangement selon la revendication 5, **caractérisé en ce que** la rainure (11) est prévue dans une section sans filetage (10) de la vis.

7. Arrangement selon au moins l'une des revendications 1 à 4, **caractérisé en ce que** la vis présente un bec d'enclenchement auquel est affectée dans la douille une rainure.

8. Arrangement selon la revendication 7, **caractérisé en ce que** le bec d'enclenchement est prévu dans une section sans filetage de la vis.

9. Arrangement selon au moins l'une des revendications 5 à 8, **caractérisé en ce qu'**il est prévu une rainure périphérique (11).

10. Arrangement selon au moins l'une des revendications 5 à 9, **caractérisé en ce qu'**il est prévu un bec d'enclenchement périphérique (14).
